# EUROPEAN PATENT SPECIFICATION

(11) **EP 1 501 347 B1**
(45) Date of publication and mention of the grant of the patent: **15.11.2006**
(21) Application number: 03733895.1
(22) Date of filing: 25.04.2003
(51) Int. Cl.: A01J 27/04, A01J 25/12

(54) **CASTING APPARATUS AND PROCESS**
GIESSVORRICHTUNG UND -VERFAHREN
APPAREIL ET PROCEDE DE MOULAGE

(30) Priority: 07.05.2002 US 140773
(43) Date of publication of application: 02.02.2005
(73) Proprietor: SCHREIBER FOODS INC., Green Bay, Wisconsin 54307-9010 (US)
(72) Inventor: OWENS, Shawn, Joplin, MO 64801 (US); DENNIS, Childress, Monett, MO 65708 (US)
(74) Representative: Merrifield, Sarah Elizabeth
(86) International application number: PCT/US2003/012953
(87) International publication number: WO 2003/094603

(56) References cited:
- WO-A-02/13621
- US-A- 2 907 109
- US-A- 3 887 719
- US-A- 4 217 818
- US-A- 4 735 817
- US-A- 4 790 242

## Description

### BACKGROUND OF THE INVENTION

The invention generally relates an apparatus and process for continuously casting food products. More specifically, the invention relates to an improved casting plate and a method for using same.

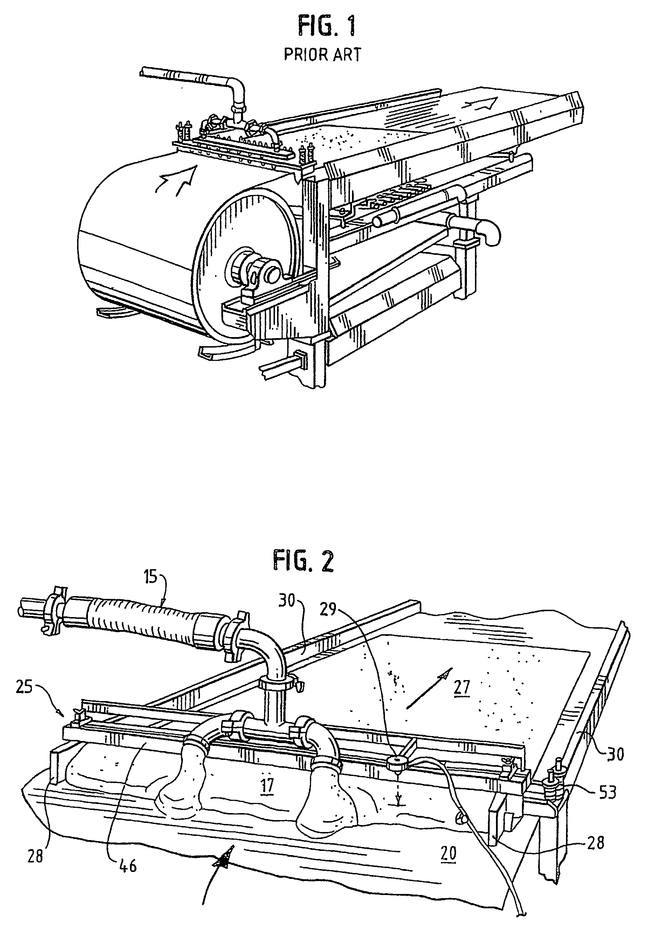

Food products such as processed cheese may be difficult to cut or slice because, for example, the cheese tends to cling to the cutting surfaces. For this or other reasons, it may be preferable to form the hot melted product into thin sheets of perhaps 1.2m (four feet) wide, for example, using an extrusion or casting process. A conventional cheese casting machine shown in FIGURE 1, for example, uses a cooling belt, such as a stainless steel belt, driven by large drums. Pans may be installed at the undersides of the belts to flood the insides of the belt with a cooling medium such as a refrigerated glycol solution. A pressurized discharge manifold for distributing the food product, such as molten cheese, onto the cooling belt and for forming the product into a sheet having a controlled thickness, may be mounted at the infeed end of the machine on top of the belts ("top- cast"). This equipment may, alternatively, be mounted at some position around the radius of the upper drum at the infeed end("angle-cast"). Alternatively, a gauge roller on a chill roll may be used to provide a casted food product in sheet form. The thin, cooled sheets may be slit into narrow strips or ribbons. The strips may then be stacked-and cut to length for packaging, such as in slice or other forms.

A conventional pressure manifold used for casting a food product such as processed cheese across a casting belt at a controlled thickness (see e.g. document US-A-4,790,242), is a closed cavity typically consisting of a two-piece chamber. Conventionally, a positive displacement pump distributes the food product to the pressurized closed cavity of the manifold. The closed cavity receives the hot food product under pressure and distributes it uniformly along the full length of the manifold, which is oriented perpendicular to the length of the casting belt. Due to the closed cavity of the pressure manifold, when cooled food product such as sticky processed cheese must be cleaned out of the chamber as is periodically required, to clear out blocked ports, etc. , it may be necessary to remove and disassemble the manifold. This can be a time consuming and laborious task. In addition, the pump has inherent variability associated with it, depending upon the pump controls as well as fluctuations in the temperature and viscosity in the food product.

Pressure manifolds also typically employ PID (proportional, integral and derivative) controls to maintain pressure to the manifold. To satisfy commercial requirements, food product deposition onto the cooling belt must be accomplished rapidly and on a continuous basis to accommodate the high rate at which the product is discharged on the casting belt. The manifold should also provide a uniform and continuous discharge of the heated food product to the casting surface with appropriate adjustment means provided, as needed, to accommodate differences in product density and viscosity.

Conventional pressure manifolds utilize plastic inserts or dividers to control the height of the manifold above the cooling belt. Multiple valve controls are also used to distribute the food product within the manifold. For cleaning, the manifold is typically removed using a hoist due to its weight (e.g., 136 kg (300 pounds)). Cumbersome and time-consuming removal and replacement of the manifold is also required for most changeovers, as may be necessitated by product formula or sheet width changes.

There are disadvantages to using chill roll technology. Chill rolls may be 1.2 - 1.5m (4-5 feet) in diameter, and employ a smaller gauge roll, adjustable in height above the chill roll, for varying the product sheet thickness. A bubble of cheese is deposited upstream of the gauge roller, and proceeds downstream toward the gauge roller as the chill roll rotates. To prevent the food product from sticking to the gauge roll surface forming the product into a sheet, the gauge roll is chilled, typically using a cooling solution, which adds to the cost and complexity of the chill roll apparatus. The gauge roll is also machined to a given outer diameter, and the thickness of each ribbon across the width of the product sheet is not individually controllable using a gauge roll.

Accordingly, objects of the present invention include: the provision of an economical, substantially lighter, more user-friendly casting apparatus, which renders valve and PID controls unnecessary, and which need not be removed for changeovers. It would also be advantageous to provide a casting apparatus which is easily adjustable, such as from an operator station located on the floor level, and which may be more easily cleaned than conventional pressure manifolds.

### DEFINITION OF CLAIM TERMS

The following terms are used in the claims of the patent as filed and are intended to have their broadest meaning consistent with the requirements of law. Where alternative meanings are possible, the broadest meaning is intended. All words used in the claims are intended to be used in the normal, customary usage of grammar and the English language.

"Casting blade" means a device having a fixed edge, which may constitute a variety of shapes and sizes, for forming a puddle of food product deposited on a surface into a sheet-like form.

"Casting belt" means a conveyor belt or other means, which may be chilled or cooled, suitable for supporting a cast food product.

### SUMMARY OF THE INVENTION

The objects mentioned above, as well as other objects, are solved by the present invention, which overcomes disadvantages of prior art casting apparatus and continuous casting processes, while providing new advantages not believed associated with such apparatus or processes. The present invention provides a lightweight, easily adjustable casting apparatus as set out in claim 1 and a process for casting a food product into a sheet as set out in claim 17.

In one preferred embodiment, a lightweight, easily adjustable casting apparatus is provided. The casting apparatus has an open cavity for accepting food product on an upstream side and for producing a cast sheet of the food product. A distribution system, such as a pump and piping, may be used to deposit the food product onto a moving support surface, such as a casting belt or chill roll, and on the upstream side of the casting apparatus at a substantially predetermined deposition rate. A mechanism, such as a photoeye, may be used to measure the height of the food product being deposited on the support surface. The casting apparatus includes a static casting blade located at a predetermined height above the support surface, for determining the thickness of the food product sheet. The casting apparatus may be of the top-cast or angle-cast variety.

The height of the casting blade may be adjusted during the casting operation. A blade adjustment, such as a linear actuator, may be used to adjust the height of the entire casting blade above the support surface. A number of blade portion adjustments, which may be evenly spaced along the casting blade, may be used to adjust the height of predetermined portions of the casting blade above the support surface.

Devices or mechanisms are used to control the dimensions of the product sheet. Thus, the casting apparatus may include vertical plates inside its open cavity to adjust the puddle width. On the downstream side of the casting apparatus, opposing side rails located along at least a portion of a longitudinal periphery of the support surface are used to control the width of the product sheet. The distance between the opposing side rails may be adjusted.

Preferably, pressure is maintained within a predetermined range on the casting apparatus (not including the casting blade) and against the support surface. For this purpose, one or more spring- loaded tensioning members may be used.

Using the principles of the present invention, a casting apparatus weighing less than 45.4 kg (100 pounds), and as light as about 22.7 kg (50 pounds), may be provided. Such a lightweight assembly facilitates cleaning and replacement of the casting apparatus.

Many different kinds of food products may be processed using the present invention, including processed cheese and peanut butter, for example, as well as less viscous and more fluid, gelatin-based food products, for example.

A process for casting a food product into a sheet also forms a part of the present invention. A moving support surface for the food product is provided. A puddle of molten food product may be deposited on the support surface, at an upstream side of an open-cavitied casting apparatus mounted above the support surface. The casting apparatus uses a casting blade to cast the food product to a predetermined thickness. The height above the support surface of the casting blade, or of preselected portions of the casting blade, may be adjusting during use of the casting apparatus. The dimensional characteristics of the sheet of the food product as the food product cools on the moving support surface is controlled.

### BRIEF DESCRIPTION OF THE DRAWINGS

The novel features which are characteristic of the invention are set forth in the appended claims. The invention itself, however, together with further objects and attendant advantages thereof, will be best understood by reference to the following description taken in connection with the accompanying drawings, in which:
FIGURE 1 is a perspective view of a conventional cheese casting machine using a pressure manifold having a closed cavity;
FIGURE 2 is a perspective view from the upstream end of one preferred embodiment of the present invention, illustrating a top-cast, open-cavitied casting apparatus in which a "puddle" of the food product has been discharged on the casting belt and on the upstream side of the casting apparatus;
FIGURE 3 is a planar perspective view of the casting apparatus of FIGURE 2;
FIGURE 4 is a side sectional view of the casting apparatus of FIGURE 2;
FIGURE 5 is a partial side sectional view of the casting apparatus of FIGURE 2;
FIGURE 5a is perspective view of portions of the casting apparatus of FIGURE 2 in unassembled form;
FIGURE 6 is a sectional view taken along sections lines 6-6 of FIGURE3;
FIGURE 7 is a top sectional view of the casting apparatus taken along sections lines 7-7 of FIGURE6;
FIGURE 8 is an enlarged side, partial sectional view of the casting apparatus of FIGURE 2;
FIGURE 9 is a sectional view of the casting apparatus of FIGURE 2;
FIGURE 10 is a sectional view of the casting blade adjustment device for adjusting the height of the entire casting blade of the casting apparatus of FIGURE 2;
FIGURE 11 is an enlarged view of the circled portion of FIGURE 10;
FIGURE 12 is a sectional view of the casting blade adjustment device of the casting apparatus of FIGURE 2;
FIGURE 13 is an enlarged view of the circled portion of FIGURE 12;
FIGURES 14 and 15 are planar side and downstream views, respectively, of an angle-cast embodiment of the casting apparatus of the present invention; and
FIGURES 16 and 17 are perspectives view of the casting apparatus in raised and lowered positions, respectively.

### DETAILED DESCRIPTION OF THE PREFERRED EMBODIMENTS

Set forth below is a description of what are currently believed to be the preferred embodiments and/or best examples of the invention claimed. Future and present alternatives and modifications to these preferred embodiments are contemplated. Any alternatives or modifications which make insubstantial changes in function, in purpose, in structure or in result are intended to be covered by the claims of this patent.

The present invention utilizes a static blade, preferably of stainless steel, as a fixed edge to cast a food product to predetermined dimensions. The casting blade is located ata known distance above a moving casting belt, typically also of stainless steel, which is in turn located over a rigidly mounted wear plate. A food product to be cast, such as all types of processed cheese, gelatin-based food products such as spiced gelatins, or other food products, is delivered to the upstream edge of the casting blade where it is distributed by gravity. As the casting belt moves, the product is pulled under the casting blade, casting the product to a known thickness and width. As will be better understood from the following description, the invention may be used with casting apparatus employing a casting belt, as well as those using a chill roll.

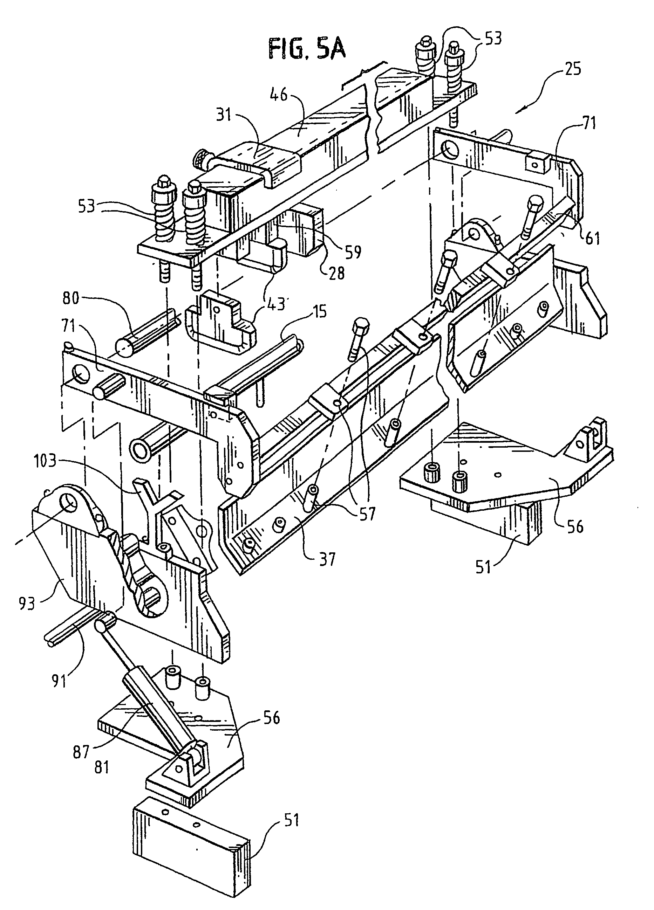

Referring now to a preferred embodiment of the invention shown in FIGURE 2, casting device 10 communicates with a food product distribution system 15, which may include an extrusion and/or pumping system with piping, as shown, to controllably deposit a"puddle" 17 of the food product, such as molten cheese, spiced gelatin (as described in co-pending U.S. patent application no. 10/140,772, assigned to the same assignee, and titled "Product And Process For Delivering Flavoring Agents To Food Products,") or other food products, onto casting belt 20, which is moving in the direction shown by the arrow. Lightweight casting device25 evenly distributes the food product into a sheet 27 having a controlled thickness and width, as further described below. A measuring device, such as photo-eye 29, may be mounted on casting device 25 to monitor the puddle height, and may electronically communicate with the distribution system 15 to increase or decrease the speed of food product distribution in order to maintain a product puddle with uniform dimensions. Piping 15 may be supported by Y-shaped support 103 (FIGURE 5a).

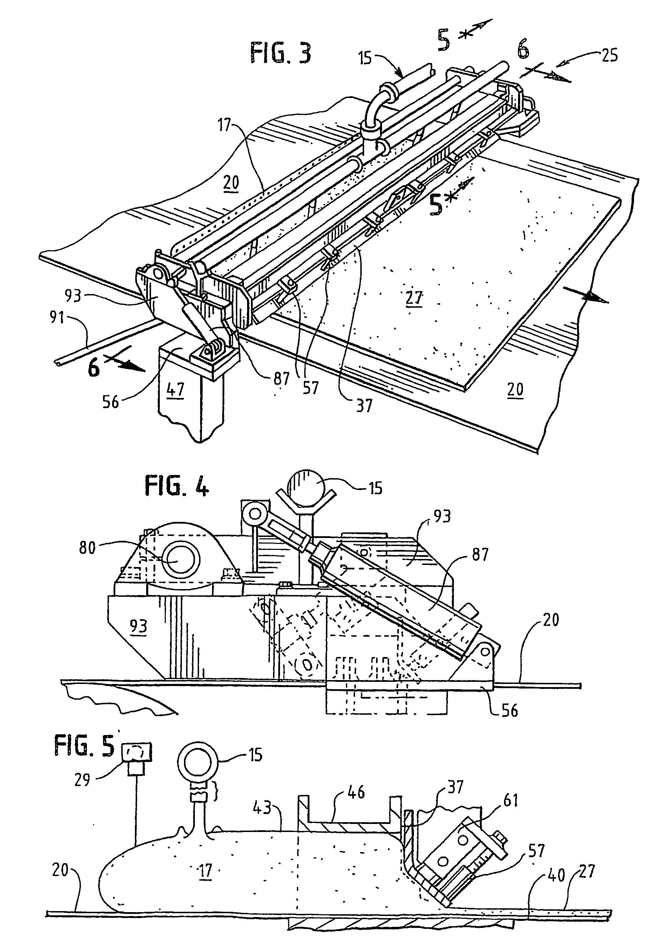

Referring now to FIGURES 3-5, a preferred embodiment of the casting apparatus of the present invention, generally referenced as 25, is shown. Casting apparatus 25 is an open-cavitied, static device with a casting blade 37 which evenly contacts and uniformly distributes food product over casting belt 20 into a sheet form. Casting belt 20 rides over wear plate 40, which may be made of a low-friction material such as UHMW plastic.

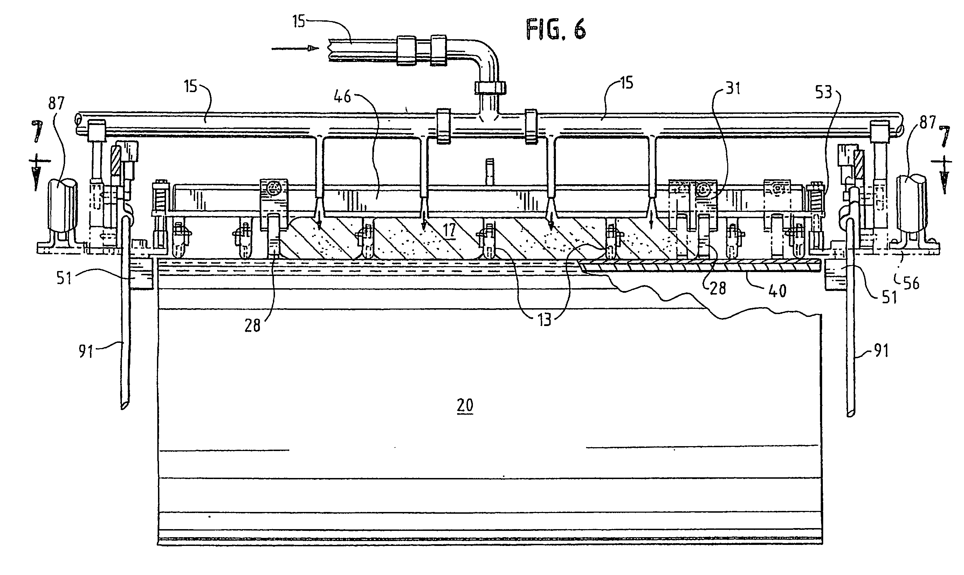

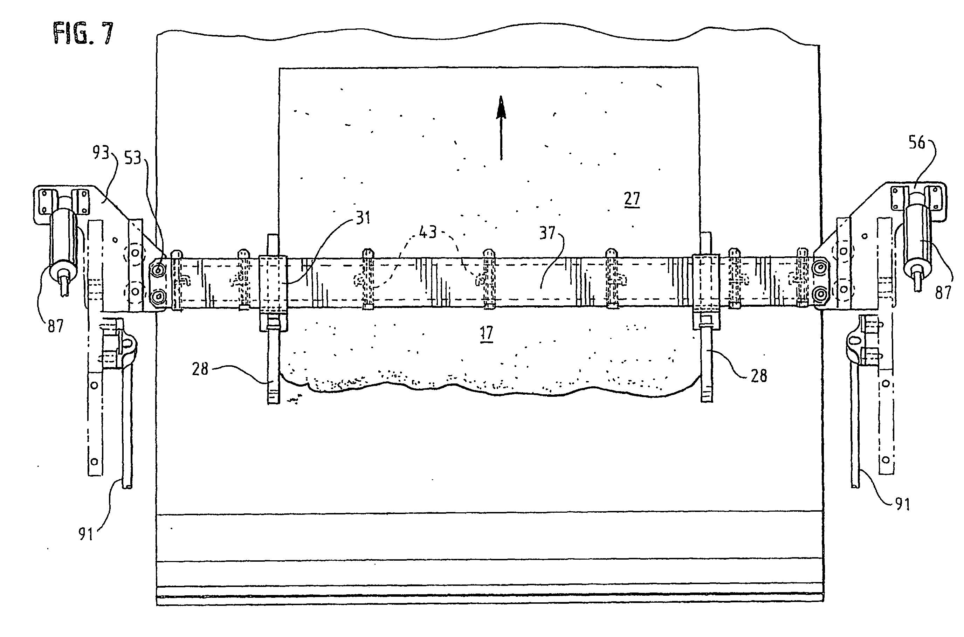

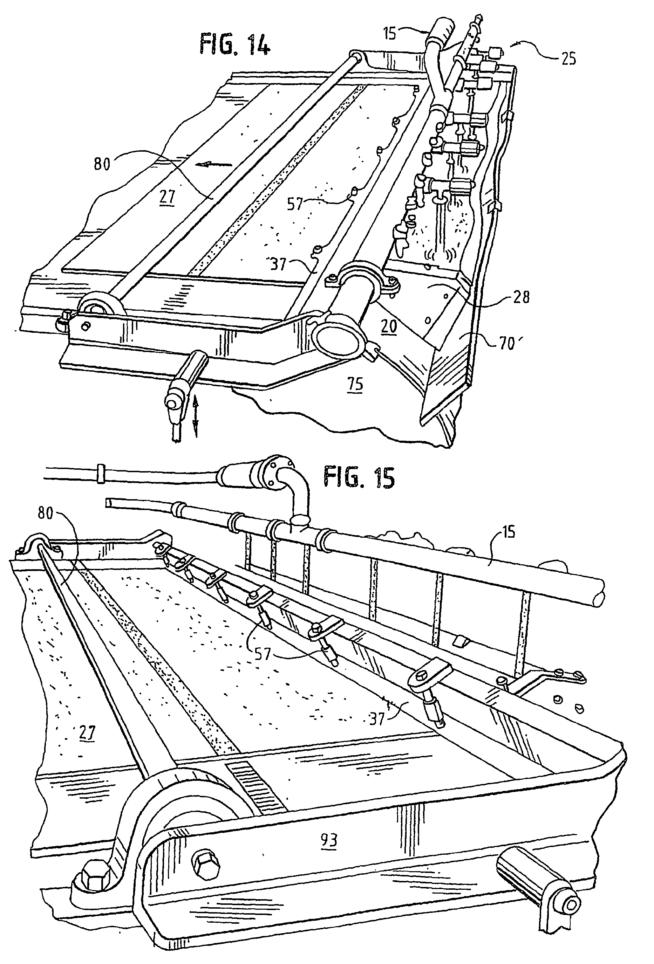

Referring to FIGURES 6 and 7, plastic width adjustment plates 28 may be used to adjust the width of the puddle 17. It will be understood that with the angle-cast example shown in FIGURES 14 and 15, described below, these plates may be machined to the radius of the casting belt. Devices such as sliders 31, in conjunction with (e.g.) thumbscrews, not shown, may be used to allow plates 28 to be slid and then rigidly adjusted about the length of casting blade 37.

Referring to FIGURES 5-7, plastic inserts 43 fit within brackets 59 (FIGURE 5a), which are rigidly connected at their topmost portions to the bottom portion of hold-down assembly 46, and are used to hold down casting belt 20 in a predetermined position on wear plate 40. Inserts 43 are similar in shape and identical in function (i.e., to control the height of the casting apparatus above the casting belt) to the plastic inserts or dividers used with conventional pressure manifolds.

Referring to FIGURES 6-7, spring-loaded tensioners 53, mounted on fixed support 47, may be used to hold U channel 46, and thus the remainder of casting apparatus 25 not including casting blade 37, down within a predetermined tension range against casting belt 20. This protects the casting device from wear and rubbing against the moving, preferably stainless steel casting belt.

Mechanism for selectively adjusting the height of casting blade 37, or portions thereof, during use of the casting apparatus, or off-line, are now described.

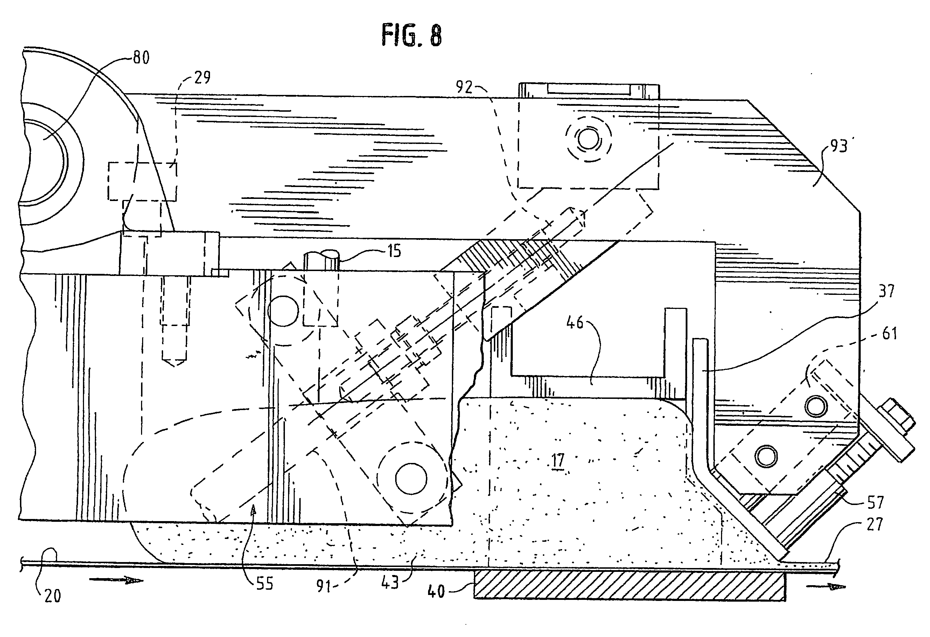

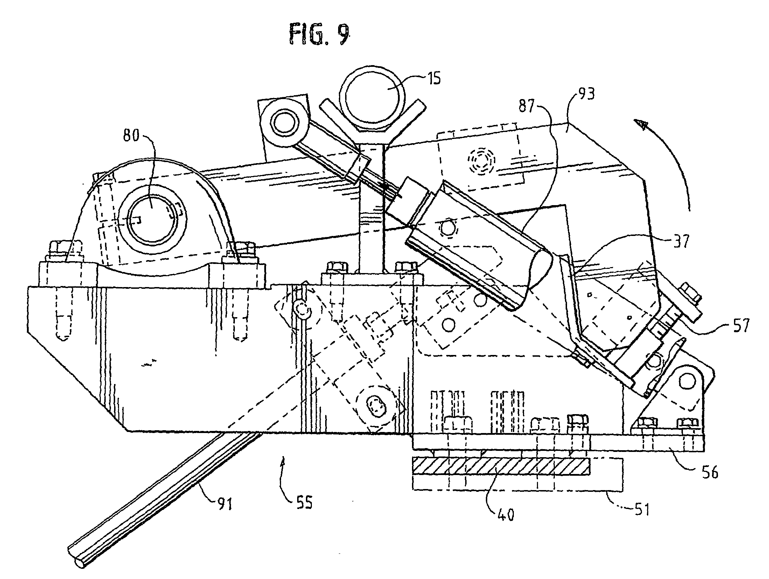

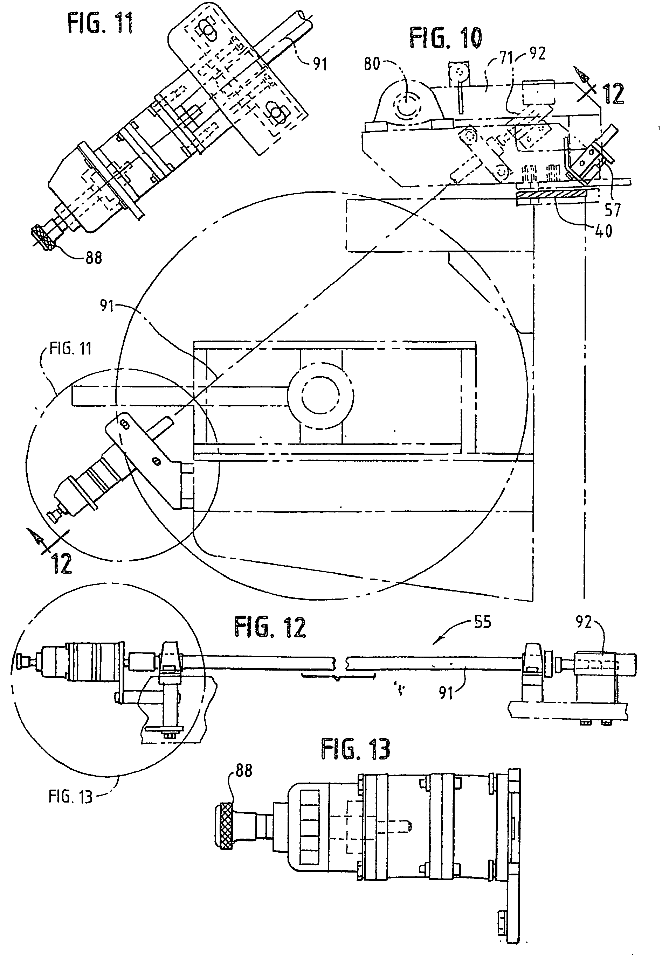

Referring to FIGURES 8-13, a mechanical adjustment tool such as linear actuator 55, for example, permits the entire casting blade 37 to be raised or lowered and thus located at a selected height above the casting belt. Blade 37 is carried by side plates 71 (FIGURE 5a), contacting the distal end of linear actuator 55 (FIGURE10). Linear actuator 55 may include a knob 88 which may be rotated by an operator at ground level; rotation of knob 88, in turn, may rotate shaft 91 and threaded rod 92 which functions as the linear actuation device for adjusting the height of the casting blade "on the fly" (during the casting operation) to within (preferably) thousandths of an inch, so as to reliably control sheet thickness. This casting blade height adjustment allows an operator to adjust blade height to account for differences in product thickness and viscosity caused by temperature fluctuations, product inconsistency or other variables.

Referring to FIGURES 3, 5, 6 and 15, mechanisms 57 for selectively adjusting the height of portions of the casting blade 37 are provided, such as thumbscrews or turnbuckles, may be uniformly distributed along the casting blade 37. These mechanisms 57 are mounted on bar 61 (see FIGURES 5a and 8) and permit slight "on the fly" or off-line adjustments to the area of the blade adjacent the individual adjustment mechanism 57. Using blade adjustments 57, the casting blade may be aligned parallel to the casting belt and wear plate so that the thickness of the food product being extruded is consistent across the width of the sheet.

FIGURES 14 and 15 illustrate a less-preferred, angle-cast embodiment of the present invention, in which casting belt 20 is mounted on drum 75. A plastic dam 70 may be used to retain puddle 17 of the food product and resist it from dropping down the upstream side of the casting blade under the influence of gravity.

To facilitate cleaning, adjustment and replacement of the casting apparatus, arm (s) 93 pivotally connecting the casting apparatus for rotation about support bar 80 may be used, as shown in FIGURES 14-17. Air cylinder 87 is rigidly mounted to support plate 56 and may be used to drive rotation of arm (s) 93, as shown. Tap block 51, located below support plate 56(FIGURE SA), which may be oriented at a 2° angle, for example, may be used to ensure contact between wear plate 40 and casting belt 20.

Upon extrusion, a low viscosity food product such as spiced gelatin, described above, may be so fluid that, despite cooling, it will not retain its extruded dimensional characteristics. If such a fluid-like product is allowed to freely flow, the extruded width of the product may increase, and thus the sheet thickness may decrease, resulting in an inconsistent thickness across the width of the extrusion. In some cases, the fluid-like product may travel 1.2-1.8m (4-6 feet) before it is cooled enough to begin retaining its geometrical shape. To solve this problem and prevent the product from losing its dimensional characteristics, side rails 30 are located downstream of casting blade 37, on each side of the extruded product. Side rails 30 contact the casting belt and act as a boundary for the fluid-like product until it is cooled enough to retain its dimensional characteristics. These side rails may be vertical or turned 45 degrees relative to the plane of the casting belt surface. The side rails are also adjusted width-wise (i.e., they may be brought closer together or farther apart) using convenient controls such as thumbscrews, to provide the product sheet with a predetermined width. The side rails may be constructed from plastic or any other material that is not damaging to the preferably stainless steel casting belt, as further disclosed in co-pending U. S. Serial No. 10/140,773, titled "Casting Food Products To Controlled Dimensions," assigned to the same assignee as here, and filed 7 May 2002. The extruded sheet 27 may then be further cooled so that it may be cut into ribbons using conventional apparatus such as a ribbon slitting and twisting mechanism (not shown). The ribbons may then be further cut into slices or other forms and packaged. It has been found that for more viscous products, like processed cheese, the use of side rails may be unnecessary.

Various advantages and benefits flow from use of the present invention. Thus, it will now be appreciated that a lightweight, simplified and economical casting device is provided in which an open cavity rather than a pressure manifold may be used. Valve controls and PID controls are also rendered unnecessary. Instead, more economical high/low speed control with digital (level) input may be employed.

Casting apparatus 25 also need not be removed for changeovers. Due to its open cavity, food product such as processed cheese can be scraped or otherwise cleaned from inside the cavity without the need to remove or disassemble the casting apparatus.

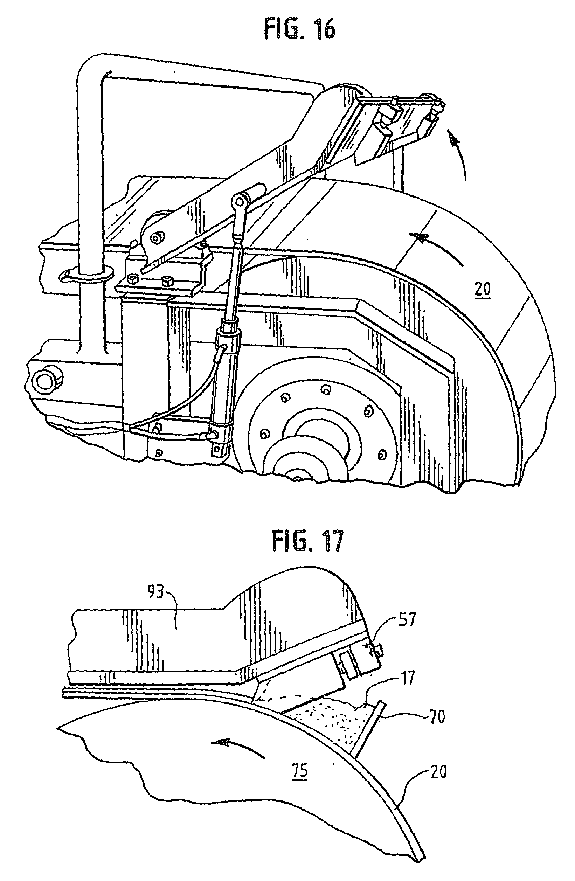

Due to its relatively light weight of preferably less than about 45.4 kg (100 pounds), and most preferably less than about 22.7 kg (50 pounds), the casting apparatus may be easily raised and lowered for cleaning using, e.g., a pneumatic cylinder as shown in FIGURE 16. This also allows sheet height adjustment to be performed from an operator station located on floor level.

Additionally, with the present invention the food product puddle is deposited upstream of the casting apparatus, and the cohesive force between the food product and the casting belt pulls the food product underneath the casting blade, creating a product sheet of uniform thickness. Thus, the present invention can accommodate minor fluctuations in pump speed without affecting the desired dimensions of the food product sheet.

The above description is not intended to limit the meaning of the words used in the following claims that define the invention. Rather, it is contemplated that future modifications in structure, function or result will exist that are not substantial changes and that all such insubstantial changes in what is claimed are intended to be covered by the claims.

## Claims

1. A lightweight, easily adjustable casting apparatus (25) for producing a cast sheet (27) of a food product, the apparatus comprising:
a moving support surface (20) for the food product;
a casting blade (37) located at a predetermined height above the support surface (20) for determining the thickness of the cast sheet, the height of the casting blade being adjustable during the casting operation; **characterised by**
an open cavity structure configured to accept the food product on an upstream side of the casting blade (37) and to create a puddle (17) of the food product on the moving support (20); and
adjustable side rails (30) located downstream of the casting blade (37) along opposite sides of at least a portion of a longitudinal periphery of the moving support surface for controlling the width of the cast sheet.

2. The casting apparatus of Claim 1 further comprising an adjustment mechanism for adjusting the height of the casting blade above the moving support surface.

3. The casting apparatus of Claim 2, wherein the adjustment mechanism comprises a linear actuator.

4. The casting apparatus of Claim 1 further comprising a plurality of adjustment devices located along the casting blade, the adjustment devices permitting the height of predetermined portions of the casting blade above the moving support surface to be adjusted.

5. The casting apparatus of Claim 1, wherein the moving support surface comprises a belt.

6. The casting apparatus of Claim 1, wherein the moving support surface comprises a chill roll.

7. The casting apparatus of Claim 1 further comprising a photo-eye configured to measure the height of the food product deposited on the moving support surface.

8. The casting apparatus of Claim 1, wherein the opposing side rails comprise adjustable members such that a distance between the opposing side rails is adjustable.

9. The casting apparatus of Claim 5, further comprising means for maintaining pressure within a predetermined range on the casting apparatus and against the belt, the pressure means not maintaining the pressure on the blade.

10. The casting apparatus of Claim 9, wherein the maintaining means comprises one or more spring-loaded tensioning members.

11. The casting apparatus of Claim 1, wherein the casting apparatus weighs less than 45.4 kg (100 pounds).

12. The casting apparatus of Claim 5, wherein the open cavity structure is positioned over a horizontal portion of the belt.

13. The casting apparatus of Claim 5, wherein the casting apparatus further comprises a drum about which the belt travels, and wherein the open cavity structure is positioned on a radius of the drum.

14. The casting apparatus of Claim 1, wherein the casting apparatus is configured for casting a food product that comprises processed cheese.

15. The casting apparatus of Claim 1, wherein the casting apparatus is configured for casting a gelatin-based food product.

16. The casting apparatus of Claim 1 wherein the casting apparatus comprises a lightweight, open-cavitied casting apparatus, and wherein the open containment structure is configured for depositing the food product in molten form onto the moving support.

17. A process for casting a food product into a sheet (27), comprising the steps of:
providing a moving support surface (20) and an open-cavitied casting apparatus (25) mounted over the support surface, the casting apparatus having a casting blade (37),
depositing the food product (17) in molten form on the moving support surface (20) and upstream of the casting apparatus;
using the casting blade (37) to cast the food product to a predetermined thickness to form a sheet (27) of the food product; and
controlling the dimensional characteristics of the sheet (27) of the food product as the food product cools on the moving support surface (20).

18. The process of Claim 17, further comprising the step of adjusting the height of the casting blade, or of preselected portions of the casting blade, above the support surface.

19. The process of Claim 17, wherein controlling the dimensional characteristics of the sheet of the food product comprises adjusting side rails located along opposite sides of at least a portion of a longitudinal periphery of the moving support surface.

## Patentansprüche

1. Leichte, einfach einstellbare Gießvorrichtung (25) zum Herstellen einer gegossenen Lage (27) eines Nahrungsmittelerzeugnisses, wobei die Vorrichtung aufweist:
eine bewegliche Stützfläche (20) für das Nahrungsmittelerzeugnis;
einen Gießschenkel (37), der auf einer vorbestimmten Höhe oberhalb der Stützfläche (20) angeordnet ist, um die Dicke der gegossenen Lage festzulegen, wobei die Höhe des Gießschenkels (37) während der Gießoperation einstellbar ist;
**gekennzeichnet durch**
eine offene Hohlraumstruktur, die derart ausgebildet ist, dass sie das Nahrungsmittelerzeugnis auf einer stromaufwärtigen Seite des Gießschenkels (37) empfängt und eine Lache (17) des Nahrungsmittelerzeugnisses auf der beweglichen Stützfläche (20) erzeugt; und
einstellbare Seitenschienen (30), die stromabwärts des Gießschenkels (37) entlang gegenüberliegenden Seiten von wenigstens einem Bereich eines Längsumfangs der beweglichen Stützfläche (20) angeordnet sind, um die Breite der gegossenen Lage zu steuern.

2. Gießvorrichtung nach Anspruch 1, die ferner einen Einstellmechanismus zum Einstellen der Höhe des Gießschenkels oberhalb der beweglichen Stützfläche aufweist.

3. Gießvorrichtung nach Anspruch 2, wobei das Einstellmittel einen linearen Stellantrieb aufweist.

4. Gießvorrichtung nach Anspruch 1, die ferner mehrere Einstelleinrichtungen aufweist, die entlang des Gießschenkels angeordnet sind, wobei die Einstelleinrichtungen eine Einstellung der Höhe von vorbestimmten Bereichen des Gießschenkels oberhalb der beweglichen Stützfläche ermöglichen.

5. Gießvorrichtung nach Anspruch 1, wobei die bewegliche Stützfläche ein Band umfasst.

6. Gießvorrichtung nach Anspruch 1, wobei die bewegliche Stützfläche eine Kühlwalze umfasst.

7. Gießvorrichtung nach Anspruch 1, die ferner eine Fotozelle umfasst, die zum Messen der Höhe des Nahrungsmittelerzeugnisses, das auf der beweglichen Stützfläche geordnet ist, konfiguriert ist.

8. Gießvorrichtung nach Anspruch 1, wobei die einander gegenüberliegenden Seitenschienen einstellbare Elemente umfassen, so dass ein Abstand zwischen den einander gegenüberliegenden Seitenschienen einstellbar ist.

9. Gießvorrichtung nach Anspruch 5, die ferner Mittel zum Aufrechterhalten eines Druckes innerhalb eines vorbestimmten Bereiches auf die Gießvorrichtung und gegen das Band umfasst, wobei die Druckmittel nicht den Druck auf den Schenkel aufrecht erhalten.

10. Gießvorrichtung nach Anspruch 9, wobei das Aufrechterhaltungsmittel ein oder mehrere federbelastete Spannelemente aufweist.

11. Gießvorrichtung nach Anspruch 1, wobei die Gießvorrichtung weniger als 45,4 kg (100 Pfund) wiegt.

12. Gießvorrichtung nach Anspruch 5, wobei die offene Hohlraumanordnung oberhalb eines horizontalen Bereiches des Bandes positioniert ist.

13. Gießvorrichtung nach Anspruch 5, wobei die Gießvorrichtung ferner eine Trommel aufweist, um die sich das Band bewegt, und wobei die offene Hohlraumanordnung an einem Radius der Trommel positioniert ist.

14. Gießvorrichtung nach Anspruch 1, wobei die Gießvorrichtung zum Gießen eines Nahrungsmittelerzeugnisses, das verarbeiteten Käse umfasst, konfiguriert ist.

15. Gießvorrichtung nach Anspruch 1, wobei die Gießvorrichtung zum Gießen eines auf Gelatine basierenden Nahrungsmittelerzeugnisses konfiguriert ist.

16. Gießvorrichtung nach Anspruch 1, wobei die Gießvorrichtung eine leichte Gießvorrichtung mit offenem Hohlraum aufweist, und wobei die Eindämmstruktur zum Anordnen des Nahrungsmittelerzeugnisses in geschmolzener Form auf die bewegliche Stützfläche konfiguriert ist.

17. Verfahren zum Gießen eines Nahrungsmittelerzeugnisses in eine Lage (27), dass die Schritte aufweist:
Vorsehen einer beweglichen Stützfläche (20) und einer Gießvorrichtung (25) mit offenem Hohlraum, die oberhalb der Stützfläche befestigt ist, wobei die Gießvorrichtung einen Gießschenkel (37) aufweist;
Anordnen des Nahrungsmittelerzeugnisses (17) in geschmolzener Form auf der beweglichen Stützfläche (20) und stromaufwärts der Gießvorrichtung;
Verwenden des Gießschenkels (37), um das Nahrungsmittelprodukt in einer vorbestimmten Dicke zur Bildung einer Lage (27) des Nahrungsmittelerzeugnisses zu gießen; und
Steuern der dimensionalen Eigenschaften der Lage (27) des Nahrungsmittelerzeugnisses, wenn sich das Nahrungsmittelerzeugnis auf der beweglichen Stützfläche (20) abkühlt.

18. Verfahren nach Anspruch 17, das ferner den Schritt des Einstellens der Höhe des Gießschenkels oder von vorausgewählten Bereichen des Gießschenkels oberhalb der Stützfläche aufweist.

19. Verfahren nach Anspruch 17, wobei das Steuern der dimensionalen Eigenschaften der Lage des Nahrungsmittelerzeugnisses das Einstellen von Seitenschienen umfasst, die entlang gegenüberliegender Seiten wenigstens eines Bereiches eines Längsumfangs der beweglichen Stützfläche angeordnet sind.

## Revendications

1. Appareil de moulage par coulée (25) léger et facilement réglable destiné à produire une feuille coulée (27) d'un produit alimentaire, l'appareil comprenant :
une surface de support mobile (20) pour le produit alimentaire ;
un noyau de moule (37) situé à une hauteur prédéterminée au-dessus de la surface de support (20) afin de déterminer l'épaisseur de la feuille coulée, la hauteur du noyau du moule étant réglable au cours de l'opération de moulage par coulée ; **caractérisé par** :
une structure formant cavité ouverte configurée de manière à recevoir le produit alimentaire sur un côté amont du noyau du moule (37) et à créer une flaque (17) du produit alimentaire sur le support mobile (20) ; et
des rails latéraux réglables (30) situés en aval du noyau du moule (37) le long des faces opposées d'au moins une partie d'un pourtour longitudinal de la surface de support mobile afin de contrôler la largeur de la feuille coulée.

2. Appareil de moulage par coulée selon la revendication 1, comprenant en outre un mécanisme de réglage destiné à régler la hauteur du noyau du moule au-dessus de la surface de support mobile.

3. Appareil de moulage par coulée selon la revendication 2, dans lequel le mécanisme de réglage comprend un actionneur linéaire.

4. Appareil de moulage par coulée selon la revendication 1, comprenant en outre une pluralité de dispositifs de réglage situés le long du noyau du moule, les dispositifs de réglage permettant de régler la hauteur de parties prédéterminées du noyau du moule au-dessus de la surface de support mobile.

5. Appareil de moulage par coulée selon la revendication 1, dans lequel la surface de support mobile comprend une courroie.

6. Appareil de moulage par coulée selon la revendication 1, dans lequel la surface de support mobile comprend un cylindre refroidisseur.

7. Appareil de moulage par coulée selon la revendication 1, comprenant en outre un oeil photographique configuré de manière à mesurer la hauteur du produit alimentaire déposé sur la surface de support mobile.

8. Appareil de moulage par coulée selon la revendication 1, dans lequel les rails latéraux opposés comprennent des éléments réglables de telle sorte qu'une distance entre les rails latéraux opposés soit réglable.

9. Appareil de moulage par coulée selon la revendication 5, comprenant en outre des moyens destinés à maintenir une pression dans les limites d'une plage prédéterminée sur l'appareil de moulage par coulée et contre la courroie, les moyens de maintien de la pression ne maintenant pas la pression sur le noyau.

10. Appareil de moulage par coulée selon la revendication 9, dans lequel les moyens de maintien de la pression comprennent un ou plusieurs éléments de tension à ressort.

11. Appareil de moulage par coulée selon la revendication 1, l'appareil de moulage par coulée pèse moins de 45,4 kg (100 livres).

12. Appareil de moulage par coulée selon la revendication 5, dans lequel la structure formant cavité ouverte est positionnée sur une partie horizontale de la courroie.

13. Appareil de moulage par coulée selon la revendication 5, dans lequel l'appareil de moulage par coulée comprend en outre un tambour autour duquel la courroie se déplace, et dans lequel la structure formant cavité ouverte est positionnée sur un rayon du tambour.

14. Appareil de moulage par coulée selon la revendication 1, dans lequel l'appareil de moulage par coulée est configuré de manière à mouler un produit alimentaire qui comprend du fromage fondu.

15. Appareil de moulage par coulée selon la revendication 1, dans lequel l'appareil de moulage par coulée est configuré de manière à mouler un produit alimentaire à base de gélatine.

16. Appareil de moulage par coulée selon la revendication 1, dans lequel l'appareil de moulage par coulée comprend un appareil de moulage par coulée léger et à cavité ouverte, et dans lequel la structure de rétention ouverte est configurée de manière à déposer le produit alimentaire sous une forme fondue sur le support mobile.

17. Procédé de moulage par coulée d'un produit alimentaire pour former une feuille (27) comprenant les étapes consistant à :
fournir une surface de support mobile (20) et un appareil de moulage par coulée à cavité ouverte (25) monté sur la surface de support, l'appareil de moulage par coulée comportant un noyau de moule (37) ;
déposer le produit alimentaire (17) sous une forme fondue sur la surface de support mobile (20) et en amont de l'appareil de moulage par coulée ;
utiliser le noyau du moule (37) pour mouler par coulée le produit alimentaire à une épaisseur prédéterminée de manière à former une feuille (27) du produit alimentaire ; et
contrôler les caractéristiques dimensionnelles de la feuille (27) du produit alimentaire lorsque le produit alimentaire refroidit sur la surface de support mobile (20).

18. Procédé selon la revendication 17, comprenant en outre l'étape consistant à régler la hauteur du noyau du moule, ou des parties présélectionnées du noyau du moule, au-dessus de la surface de support.

19. Procédé selon la revendication 17, dans lequel le contrôle des caractéristiques dimensionnelles de la feuille du produit alimentaire comprend le réglage des rails latéraux situés le long des faces opposées d'au moins une partie d'un pourtour longitudinal de la surface de support mobile.
